# EUROPÄISCHE PATENTANMELDUNG

(11) **EP 1 154 283 A1**
(43) Veröffentlichungstag der Anmeldung: **14.11.2001**
(21) Anmeldenummer: 00128670.7
(22) Anmeldetag: 29.12.2000
(51) Int. Cl.: G01S 13/76

(54) **Interrogations-und Respondersystem**

(30) Priorität: 12.05.2000 CH 9432000
(71) Anmelder: OERLIKON CONTRAVES AG, 8050 Zürich (CH)
(72) Erfinder: Gerber, Peter, 8965 Berikon (CH); Ochsner, Fabian, 5415 Nussbaumen (CH)
(74) Vertreter: OK pat AG

(57) **Zusammenfassung**

Das Interrogationssystem dient zur Identifizierung einer Zielvorrichtung. Ein Sender ist ausgebildet, um eine codierte elektromagnetische Strahlung auszusenden. Die Zielvorrichtung weist Sensor-Mittel zur Detektierung dieser Strahlung und zur Umwandlung derselben in elektrische Signale auf, die einer Auswerteeinheit zugeführt werden, sowie Sender-Mittel, um nach Massgabe von in der Auswerteeinheit getroffenen Entscheidungen Meldungen an Empfänger-Mittel, die sich innerhalb oder ausserhalb des Senders befinden, zurückzusenden. Der Sender umfasst eine Schaltung mit einem Oszillator und eine Antenne, die ausgebildet sind, um einzelne Impulse (31, 32, 33) oder kurze Pakete von Impulsen im Gigafrequenzbereich zu erzeugen, die zeitlich moduliert sind. Aus diesen Impulsen wird ein codiertes Informationssignal (37, 38, 39) gewonnen.

## Beschreibung

Die vorliegende Erfindung betrifft ein Interrogations- und Respondersystem.

Aus der europäischen Patentanmeldung 97120818.6 (EP 0 859 243 A1) ist ein Laseridentifikations/Simuiationssystem mit einem Lasergerät zur Identifizierung von einer Respondervorrichtung bekannt. Das Lasergerät ist ausgebildet, um einen codierten Laserstrahl auszusenden, wobei die Respondervorrichtung Sensor-Mittel zur Detektierung des Laserstrahls und zur Umwandlung desselben in elektrische Signale aufweist, die einer Auswerteeinheit zugeführt werden, sowie Sender-Mittel, um nach Massgabe von in der die einer Auswerteeinheit getroffenen Entscheidungen Meldungen an Empfänger-Mittel, die sich innerhalb oder ausserhalb des Interrogationssystems befinden, zurückzusenden. Dieses Interrogationssystem ist ausgestaltet, um einen eng gebündelten Laserstrahl auszusenden, und umfasst Zerhakker-Mittel, um eine Laser-Strahlung auszusenden

Ein solches System wird in Waffen montiert, die normalerweise von Soldaten verwendet werden, wobei alle Teilnehmer an einer Übung, sowohl Personen wie Objekte, mit Detektoren ausgestattet sein können, die eine mögliche Waffenwirkung auf den Teilnehmer registrieren. Die Wirkungsweise solcher bekannten Systeme stellt die technischen Grundlagen eines Freund-Feind-Erkennungssystems dar, das auch nach der vorliegenden Erfindung angewendet werden kann.

Es ist nun Aufgabe der vorliegenden Erfindung, ein weiteres System dieser Art zu schaffen, das die Nachteile bekannter Systeme vermeidet oder reduziert.

Diese Aufgabe wird in vorteilhafter Weise erfindungsgemäss durch ein System nach Patentanspruch 1 gelöst.

Andere vorteilhafte Ausführungen der Erfindung ergeben sich aus den weiteren abhängigen Ansprüchen.

Die Erfindung wird nachfolgend beispielsweise an Hand verschiedener Zeichnungen näher erläutert. Es zeigt:
Fig. 1 eine schematische Darstellung einer Sendeeinrichtung (Interrogationssystems ) gemäss der Erfindung,
Fig. 2 eine schematische Darstellung einer Empfangseinrichtung (Respondervorrichtung) gemäss der Erfindung,
Fig. 3 ein Diagramm zur Erläuterung der verwendeten Informationssignale.

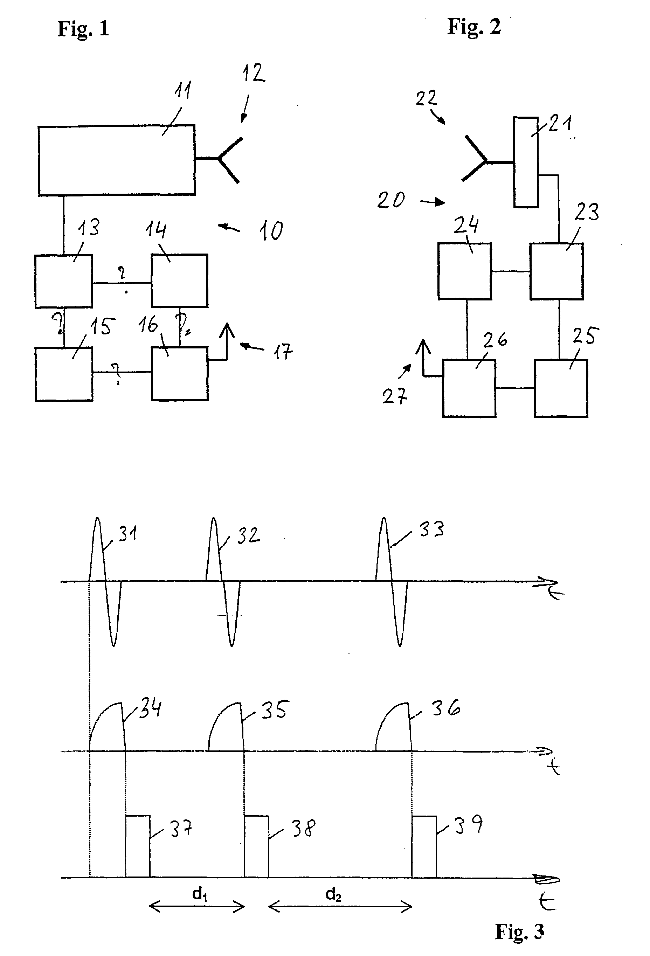

Das Interrogationssystem 10 nach Fig. 1 umfasst eine auf einer Waffe montierbare Schaltung 11 mit einer Antenne 12, die in die Schaltung 11 integriert sein kann, und einen Modulator 13, an den mindestens ein Endgerät 14 sowie eine Zentraleinheit 15 angeschlossen sein können. Das Endgerät 14 ist beispielsweise mit einer Tastatur und/oder einem Display und/oder einem Mikrophon und/oder einem Kopfhörer usw. versehen. Die als aktiver Sender ausgebildete Schaltung 11 kann einzelne Impulse oder kurze Pakete von Impulsen (z.B. mittels eines Oszillators) erzeugen, die sehr kurz sind, jedoch eine relativ grosse Energie aufweisen. An die Zentraleinheit 15 des Interrogationssystems 10 sind Empfänger-Mittel 16, 17 angeschlossen, die sich innerhalb oder ausserhalb des eigentlichen Interrogationssystems 10 befinden. Die Empfänger-Mittel 16, 17, die ebenfalls mit mindestens einem der erwähnten Endgeräte 14 und/der auch mit anderen Endgeräten verbunden sein können, umfassen beispielsweise eine Empfängervorrichtung 16 und eine Antenne oder einen Sensor 17. Anstatt der in Fig. 1 gezeigten Struktur, kann das Interrogationssystem 10 zum Beispiel einen Kommunikationsbus aufweisen.

Das Respondersystem 20 nach Fig. 2 umfasst eine Schaltung 21 mit einer Antenne 22, die in die Schaltung 21 integriert sein kann. Zum Auswerten der empfangenen elektromagnetischen Wellen kann das Respondersystem 20 zum Beispiel einen Demodulator oder Auswerteeinheit 23, an den mindestens ein Endgerät 24 sowie eine Zentraleinheit 25 angeschlossen ist, enthalten. Das Endgerät 24 kann beispielsweise mit einem Display und/oder einem Kopfhörer und/oder einem Mikrophon versehen sein. Die als Empfänger ausgebildete Schaltung 21 kann beispielsweise einen Detektor und gegebenenfalls einen Verstärker umfassen, um die von der Antenne 22 empfangenen Impulse oder Pakete von Impulsen zu verarbeiten. An die Zentraleinheit 25 sind Sender-Mittel 26, 27 angeschlossen, um nach Massgabe von in der Auswerteeinheit getroffenen Entscheidungen Meldungen an die Empfänger-Mittel 16, 17 (Fig. 1) des Interrogationssystems 10 zurückzusenden. Die Sender-Mittel 26, 27, die sich ebenfalls innerhalb oder ausserhalb des eigentlichen Respondersystems 20 befinden können, umfassen beispielsweise eine Sendevorrichtung 26 und eine Sendeantenne 27.

Das erfindungsgemässe System funktioniert nun folgendermassen:
Die beispielsweise an einer Übung beteiligten Personen und Objekte (Panzer etc.) können mindestens einen Empfänger 21, 22 vorzugsweise mit Hilfe eines Gurtsystems nach der europäischen Patentanmeldung EP 0 859 243 A1 und/oder EP 0 836 068 A1 und/oder EP 0 836 069 A1 auf sich tragen. Im übrigen kann der Gegenstand der vorliegenden Erfindung alle oben genannten Mittel umfassen, um alle aus diesen Patentanmeldungen bekannten Funktionen in gleicher oder ähnlicher Weise zu realisieren.

In Fig. 3 sind beispielsweise drei Impulse 31, 32, 33 in der Grössenordnung von Pikosekunden dargestellt. Dies entspricht einer Schwingungsfrequenz von 10 bis 1000 GHz und einer Wellenlänge von 30 bis 0.3 mm. Da dadurch die benötigte Antenne 12 nur relativ kleine Dimensionen aufweisen muss, kann sie so ausgebildet sein, dass sie in die Waffe montierbar ist. Zudem kann die Antenne 12 gegebenenfalls zusammen mit einem Schwingkreis in die Schaltung 11 integriert sein. Von einem Endgerät 14 gelieferte Signale bewirken in dem Modulator 13 eine Modulation und/oder Codierung der Steuersignale für den Schwingkreis, derart, dass die Impulse 31, 32, 33 in unterschiedlichen Abständen ausgelöst werden. Diese Impulse beinhalten somit die zu übertragende Information. Bei entsprechender Ausformung der Antenne 12, kann man die Impulse 31, 32, 33 gebündelt bzw. gerichtet übertragen. Die hier verwendete Übertragungsart ist auch als Ultra-Wide-Spread-Spectrum Übertragung bekannt. Es hat sich gezeigt, das diese Art der Übertragung verschiedene Eigenschaften hat, die eine vorteilhafte Realisierung der erfindungsgemässen Systeme ermöglicht. Man kann solche Systeme klein und energiesparend aufbauen. Auch kann bei dieser Art der Kommunikation die Distanz zum Ziel (Respondervorrichtung) ermittelt werden. Es ist ein weiterer wichtiger Vorteil, dass das hier verwendete Kommunikationsprinzip nur schwer durch Dritte lokalisierbar ist.

Die Abstrahlcharakteristik des Interrogationssystems 10 kann durch eine geeignete Antenne 12 wie gewünscht gebündelt werden. Man kann durch eine entsprechende Antenne 12 einem Winkel der Strahlungskeule von bis zu 30 mrad erzielen. Die Auslegung und die Dimensionierung von Antennen ist dem Fachmann hinlänglich bekannt.

Im Empfänger 21 werden die über die Antenne 22 empfangenen Impulse 31, 32, 33 detektiert und vorzugsweise auch verstärkt. Aus den detektierten Impulsen 34, 35, 36 können dann Informationsimpulse 37, 38, 39 (z.B. in Rechteckform) erzeugt werden, die ohne weiteres viel länger als die Impulse 31, 32, 33 und auch zeitlich versetzt sein können. Im Demodulator 23 wird die durch die unterschiedlichen Abstände d1, d2 zwischen den einzelnen Impulsen 37, 38, 39 codiert angegebene Information entziffert und in elektrisch geeigneter Form mindestens einem der Endgeräte 24, 25 zugeführt. Das Respondersystem 20 kann ausgebildet sein, um beispielsweise über die Sender-Mittel 26, 27 Antwortsignale und/oder Echosignale abzustrahlen, die von den Sensor-Mitteln 11, 12 des Interrogationssystems 10 empfangbar sind. Dadurch wird eine Distanzmessung zwischen dem Interrogationssystem 10 und dem Respondersystem 20 ermöglicht. Dies bedeutet, dass der abfragende Schütze sogar noch die Distanz zu seinem Ziel (dem Respondersystem 20) vermessen kann. Dies hat der Vorteil, dass wenn zwei Objekte hintereinander angestrahlt werden, der Soldat zusätzlich die Möglichkeit hat, abzuschätzen, welches Signal realistischer ist.

Anstatt der einzelnen Impulse 31, 32, 33 können auch Pakete von gegebenenfalls gedämpften und/oder harmonischen und/oder anharmonischen Impulsen zum Zwecke der Interrogation ausgesendet werden.

## Patentansprüche

1. Interrogationssystem, das eine Sendeeinrichtung (10) zur Interrogation einer Respondervorrichtung (20) und Empfänger-Mittel (16, 17) enthält, wobei die Sendeeinrichtung (10) derart ausgebildet ist, dass modulierte und/oder codierte elektromagnetische Strahlung (31, 32, 33) aussendbar ist, sich die Sendeeinrichtung (10) innerhalb oder ausserhalb der Sendeeinrichtung (10) befindet, und wobei die Respondervorrichtung Sensor-Mittel (21, 22) zum Empfangen dieser Strahlung und zur Umwandlung derselben in elektrische Signale (34, 35, 36), eine Auswerteeinheit (23) zum Verarbeiten der elektrische Signale (34, 35, 36), sowie Sender-Mittel (26, 27) aufweist, um nach Massgabe einer von der Auswerteeinheit (23) getroffenen Entscheidung ein Antwortsignal an die Empfänger-Mittel (16, 17) zurückzusenden, **dadurch gekennzeichnet, dass** die Sendeeinrichtung (10) eine Ansteuerschaltung (11) und eine Antenne (12) umfasst, die derart ausgebildet sind, dass einzelne elektromagnetische Impulse (31, 32, 33) oder kurze Pakete von Impulsen im Gigafrequenzbereich erzeugbar sind, die durch die Antenne (12) zeitlich moduliert und gebündelt abstrahlt werden.

2. Interrogationssystem nach Anspruch 1, **dadurch gekennzeichnet, dass** die Ansteuerschaltung (11) und die Antenne (12) in einem Gehäuse untergebracht sind, das für die Montage auf eine Waffe ausgebildet ist.

3. Interrogationssystem nach Anspruch 1 oder 2, **dadurch gekennzeichnet, dass** die Antenne (12) in die Ansteuerschaltung (11) integriert ist.

4. Interrogationssystem nach einem der Ansprüche 1 bis 3, **dadurch gekennzeichnet, dass** die Frequenz der von der Sendeeinrichtung (10) gesendeten Impulse (31, 32, 33) einen Wert aufweist, mit dem durch die Verwendung der Antenne (12) eine stark gebündelte Abstrahlcharakteristik mit einem Winkel der Strahlungskeule unterhalb von 50 mrad, vorzugsweise 30 mrad, erreicht wird.

5. Interrogationssystem nach einem der Ansprüche 1 bis 4, **dadurch gekennzeichnet, dass** die Modulationsfrequenz der Sendeeinrichtung (10) im Bereich von 10 bis 1000 GHz oder von 100 bis 1000 GHz liegt.

6. Interrogationssystem nach einem der Ansprüche 1 bis 5, **dadurch gekennzeichnet, dass** die Sensor-Mittel (21, 22) der Respondervorrichtung (20) derart ausgebildet sind, um Antwortsignale auszusenden, die von der Sendeeinrichtung (10) empfangbar sind, um in einer Zentraleinheit (15) der Sendeeinrichtung (10) auch eine Distanzmessung zwischen der Sendeeinrichtung (10) und der Respondervorrichtung (20) zu ermöglichen.

7. Interrogationssystem nach einem der Ansprüche 1 bis 6, **dadurch gekennzeichnet, dass** mindestens die Sensor-Mittel (21, 22) der Respondervorrichtung (20) ausgebildet sind, um in ein tragbares Gurtsystem aufgenommen zu werden.

8. Interrogationssystem nach einem der Ansprüche 1 bis 7, **dadurch gekennzeichnet, dass** dieses in eine Waffe, vorzugsweise eine Handfeuerwaffe integrierbar oder an einer solchen montierbar ist.

9. System mit
■ Einem Interrogationssystem, das eine Sendeeinrichtung (10) zur Interrogation einer Respondervorrichtung (20) und Empfänger-Mittel (16, 17) enthält, wobei die Sendeeinrichtung (10) derart ausgebildet ist, dass modulierte und/oder codierte elektromagnetische Strahlung (31, 32, 33) aussendbar ist, und mit
■ einer Respondervorrichtung (20), die Sensor-Mittel (21, 22) zum Empfangen dieser Strahlung und zur Umwandlung derselben in elektrische Signale (34, 35, 36), eine Auswerteeinheit (23) zum Verarbeiten der elektrische Signale (34, 35, 36), sowie Sender-Mittel (26, 27) aufweist, um nach Massgabe einer von der Auswerteeinheit (23) getroffenen Entscheidung ein Antwortsignal an die Empfänger-Mittel (16, 17) zurückzusenden,
**dadurch gekennzeichnet, dass** die Sendeeinrichtung (10) eine Ansteuerschaltung (11) und eine Antenne (12) umfasst, die derart ausgebildet sind, dass einzelne elektromagnetische Impulse (31, 32, 33) oder kurze Pakete von Impulsen im Gigafrequenzbereich erzeugbar sind, die durch die Antenne (12) zeitlich moduliert und gebündelt abstrahlt werden.
